# EUROPÄISCHE PATENTSCHRIFT

(11) **EP 3 548 523 B1**
(45) Veröffentlichungstag und Bekanntmachung des Hinweises auf die Patenterteilung: **03.08.2022**
(21) Anmeldenummer: 17811532.5
(22) Anmeldetag: 04.12.2017
(51) Int. Cl.: C08F 2/48, C08F 220/34, B33Y 10/00, B33Y 30/00, B33Y 70/00

(54) **VERFAHREN UND SYSTEM ZUR HERSTELLUNG EINES GEGENSTANDES DURCH SCHICHTWEISEN AUFBAU IM STEMPELVERFAHREN**
METHOD AND SYSTEM FOR THE PRODUCTION OF AN OBJECT THROUGH LAYERED CONSTRUCTION IN A STAMPING PROCESS
PROCÉDÉ ET SYSTÈME DE FABRICATION D'UN OBJET PAR STRUCTURE STRATIFIÉE SELON UN PROCÉDÉ DE POINÇONNAGE

(30) Priorität: 05.12.2016 EP 16202231
(43) Veröffentlichungstag der Anmeldung: 09.10.2019
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); LUDEWIG, Michael, 51519 Odenthal (DE); WAGNER, Roland, 51375 Leverkusen (DE); TOMCZYK, Christoph, 51379 Leverkusen (DE); TILLACK, Jörg, 42699 Solingen (DE); GUEDOU, Arnaud, 51399 Burscheid (DE)
(74) Vertreter: Davepon, Björn
(86) Internationale Anmeldenummer: PCT/EP2017/081368
(87) Internationale Veröffentlichungsnummer: WO 2018/104225

(56) Entgegenhaltungen:
- WO-A1-2007/002965
- WO-A1-2015/107066
- WO-A1-2015/187933
- DE-A1-102005 044 920
- US-A1- 2009 304 952
- US-A1- 2015 072 293
- US-A1- 2016 136 889
- US-A1- 2016 137 838

## Beschreibung

Die vorliegende Erfindung betrifft ein Verfahren zur Herstellung eines Gegenstands, in dem eine Schicht mit radikalisch vernetzbarem Harz selektiv zumindest teilweise vernetzt wird. Dieses erfolgt gemäß einem ausgewählten Querschnitt des zu bildenden Gegenstands. Das zumindest teilweise vernetzte Material wird Lage für Lage an einen Träger beziehungsweise an mit dem Träger verbundenen vorigen Lagen angefügt. Ein System, welches zur Durchführung des erfindungsgemäßen Verfahrens geeignet ist, weist ein Substrat, eine Steuerungseinheit, eine Applikationseinheit für das Harz auf das Substrat, eine Applikationseinheit für einen Initiator auf das Harz, eine Energie-Einwirkungseinheit und eine Kontaktierungseinheit auf.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Radikalisch härtbare Harze können in additiven Fertigungsverfahren eingesetzt werden. Beispiele für solche Verfahren sind Stereolithographie-Verfahren. US 2015/072293 A1 offenbart ein additives Fertigungsverfahren unter Verwendung eines Photopolymers, in dem photohärtbare Polyurethan-Zusammensetzungen als besonders geeignete Materialien angesehen werden. Solche Zusammensetzungen enthalten ein Polyurethan auf der Basis eines aliphatischen Diisocyanats, Poly(hexamethylenisophthalatglycol) und optional 1,4-Butandiol sowie einen polyfunktionellen Acrylatester, einen Photoinitiator und ein Antioxidans. Photohärtbare thermoplastische Polyurethanelastomere können photoreaktive Diacetylendiole als Kettenverlängerer enthalten.

US 2009/304952 A1 offenbart eine Vorrichtung zur Herstellung dreidimensionaler Objekte, umfassend ein Tablett, welches zum Halten eines Objekts während der Herstellung eingerichtet ist; eine Ablageoberfläche, auf welche Aubaumaterialien deponiert werden und einen Tintenstrahldruckkopf, welcher eingerichtet ist, um selektiv Aufbaumaterialien in einer Schicht entsprechend einem Schichtbild auf die Ablageoberfläche zu deponieren. Die deponierten Materialien werden mit dem herzustellen Objekt vereinigt, wenn das Tablett den Gegenstand derart bewegt, dass er mit den deponierten Materialien in Kontakt kommt.

WO 2015/107066A1 A1 beschreibt ein additives Herstellungssystem zur Herstellung eines dreidimensionalen Objekts. Ein Harzaufträger ist vorgesehen, um eine Schicht eines härtbaren Harzes auf eine erste Seite eines Foliensubstrats aufzutragen. Das Foliensubstrat wird durch eine transparente Stützplatte gestützt und eine Strahlungsquelle zur Strahlungshärtung der Harzschicht ist vorgesehen. Eine Plattform ist vorgesehen, um eine gestapelte Anordnung einer oder mehrerer gehärteter Harzschichten, wenigstens teilweise dem dreidimensionalen Objekt entsprechend, zu halten und ein Positionierungssystem wird zur relativen Positionierung des Foliensubstrats und der Plattform eingesetzt. Eine im Wesentlichen parallel zur Harzschicht angeordnete Maske ist vorhanden und blockiert wenigstens teilweise einfallende Strahlung auf die Harzschicht, entsprechend einem Querschnitt des Gegenstands.

DE 10 2005 044920 A1 betrifft ein Verfahren zur Herstellung eines dreidimensionalen Gegenstandes aufweisend folgende Schritte: - Auftragen einer flüssigen oder pastösen Schicht eines polymerisierbaren Harzes auf eine Zielfläche, - Bestrahlen eines ausgewählten Teils der Schicht, entsprechend einem Querschnitt des Gegenstandes, mit einem Strahl eines Polymerisations-Initiators, so dass die Schicht im ausgewählten Teil polymerisiert und aushärtet, - Wiederholen der Schritte des Auftragens und des Bestrahlens für eine Mehrzahl von Schichten, so dass die verbunden Teile der benachbarten Schichten sich verbinden, um den Gegenstand zu bilden, wobei ein kalt-härtbares duroplastisch-polymerisierbares Harz verwendet wird. Im Spezielle kann ein ungesättigtes Polyester-Harz (UP), ein Epoxid-Harz (EP), ein Vinylester-Harz (VE) oder ein Vinylesterurethan-Harz (VU) oder dass Polyurethan-Harz (PU) verwendet werden.

DE 10 143218 A1 offenbart ein System zum Drucken dreidimensionaler Modelle mit: einem Bad, das ein photopolymerisierbares Harz enthält, einem Druckkopf, der an eine Steuerung angeschlossen ist, wobei der Druckkopf aktiviert wird, um einen Photoinitiator auf einen vorgegebenen Bereich des photopolymerisierbaren Harzes abzugeben, einer Härteeinheit, die an die Steuerung angeschlossen ist, wobei die Härteeinheit aktiviert wird, um den vorgegebenen Bereich des Harzes zu einer gehärteten Polymerschicht zu härten, und einer Tragfläche, die an die Steuerung angeschlossen ist, um die gehärtete Schicht zu tragen. Offenbart wird auch ein Verfahren zum Drucken dreidimensionaler Modelle mit den Schritten: a) Füllen eines Bads mit einem durch Bestrahlung härtbaren photopolymerisierbaren Harz, b) Einstellen der Höhe einer sich innerhalb des Bads befindenden Tragfläche, so dass die Tragfläche bis zu einer Tiefe mit Harz bedeckt wird, die der Dicke der nächsten Schicht des zu druckenden Modells gleicht, c) Abgeben eines Photoinitiators in einen vorgegebenen Bereich des Bads, d) Härten des vorgegebenen Bereichs und e) Wiederholen der Schritte b-d, bis das Modell fertig ist.

Die im Stand der Technik beschriebenen Verfahren, in denen selektiv ein Photoinitiator auf eine ansonsten keinen Initiator enthaltende Harzschicht aufgetragen wird, haben den Nachteil, dass die Bauhöhe für den Gegenstand aufgrund der Abmessungen des Harzbades eher gering ist (an Stereolithographie angelehnte Verfahren) und dass die eingesetzten Harze eine gewisse Viskosität nicht überschreiten dürfen, um ein Fließen des Harzes zum Aufbau einer neuen Harzlage zu ermöglichen.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein vereinfachtes additives Fertigungsverfahren bereitzustellen, in dem hochviskose Harze einsetzbar und möglichst wiederverwertbar sind. Des Weiteren war eine Aufgabe der Erfindung, ein Verfahren und ein System bereitzustellen, mit dem Gegenstände möglichst ressourcenschonend und individualisiert hergestellt werden können.

Erfindungsgemäß gelöst wird die Aufgabe durch ein Verfahren gemäß Anspruch 1. Ein System zur Durchführung des Verfahrens ist in Anspruch 15 angegeben. Vorteilhafte Weiterbildungen sind in den Unteransprüchen angegeben. Sie können beliebig miteinander kombiniert werden, sofern sich aus dem Kontext nicht eindeutig das Gegenteil ergibt.

Ein Verfahren zur Herstellung eines Gegenstandes umfasst die Schritte:
I) Bereitstellen einer Schicht auf einem Substrat, wobei die Schicht ein radikalisch vernetzbares Harz mit einer Viskosität (23 °C, DIN EN ISO 2884-1) von ≥ 5 mPas bis ≤ 100000 mPas enthält und die Schicht eine solche Zusammensetzung aufweist, dass das Harz unter den Bedingungen des Schritts IV) keinen Zustand erreicht, in dem in einer dynamisch-mechanischen Analyse mit einem Platte/Platte-Oszillationsviskosimeter gemäß ISO 6721-10 bei 20 °C und einer Kreisfrequenz von 1/s der Betrag des Speichermoduls G' größer oder gleich dem Betrag des Verlustmoduls G" ist;
II) Auftragen einer Zusammensetzung umfassend einen Initiator für eine radikalische Vernetzung des Harzes, entsprechend einem ersten ausgewählten Querschnitt des Gegenstands, auf oder in die Schicht, so dass mindestens ein vernetzbares Volumen umfassend radikalisch vernetzbares Harz und Initiator für eine radikalische Vernetzung des Harzes, entsprechend dem ersten ausgewählten Querschnitt des Gegenstands, gebildet wird;
III) Kontaktieren des mindestens einen in Schritt II) gebildeten vernetzbaren Volumens mit einem Träger;
IV) Einwirken von Energie auf die Schicht, so dass aus dem mindestens einen vernetzbaren Volumen mindestens ein vernetztes Volumen, entsprechend dem ersten ausgewählten Querschnitt des Gegenstands, gebildet wird und das mindestens eine vernetzte Volumen mit dem Träger verbunden wird;
V) Entfernen des Trägers einschließlich des mindestens einen mit dem Träger verbundenen vernetzten Volumens von dem Substrat;
VI) Bereitstellen einer weiteren Schicht auf dem Substrat, wobei die Schicht ein radikalisch vernetzbares Harz mit einer Viskosität (23 °C, DIN EN ISO 2884-1) von ≥ 5 mPas bis ≤ 100000 mPas enthält und die Schicht eine solche Zusammensetzung aufweist, dass das Harz unter den Bedingungen des Schritts IX) keinen Zustand erreicht, in dem in einer dynamisch-mechanischen Analyse mit einem Platte/Platte-Oszillationsviskosimeter gemäß ISO 6721-10 bei 20 °C und einer Kreisfrequenz von 1/s der Betrag des Speichermoduls G' größer oder gleich dem Betrag des Verlustmoduls G" ist;
VII) Auftragen einer Zusammensetzung umfassend einen Initiator für eine radikalische Vernetzung des Harzes, entsprechend einem weiteren ausgewählten Querschnitt des Gegenstands, auf oder in die Schicht, so dass mindestens ein vernetzbares Volumen umfassend radikalisch vernetzbares Harz und Initiator für eine radikalische Vernetzung des Harzes, entsprechend einem weiteren ausgewählten Querschnitt des Gegenstands, gebildet wird;
VIII) Kontaktieren des mindestens einen in Schritt VI) gebildeten vernetzbaren Volumens mit mindestens einem zuvor mit dem Träger (500) verbundenen vernetzten Volumen;
IX) Einwirken von Energie auf die weitere Schicht, so dass aus dem mindestens einen vernetzbaren Volumen mindestens ein vernetztes Volumen, entsprechend dem weiteren ausgewählten Querschnitt des Gegenstands, gebildet wird und das mindestens eine vernetzte Volumen mit mindestens einem der zuvor mit dem Träger verbundenen vernetzten Volumina verbunden wird;
X) Entfernen des Trägers einschließlich der mit dem Träger verbundenen vernetzten Volumina von dem Substrat;
XI) Wiederholen der Schritte VI) bis X), bis der Gegenstand gebildet ist.

Im erfindungsgemäßen Verfahren können radikalisch vernetzbare Harze verarbeitet werden, deren Viskosität für übliche Stereolithographie- oder DLP-Verfahren zu hoch wäre. Auf diese Weise erschließen sich neue Materialklassen für das additive Fertigungsverfahren.

Die Schritte I) bis V) im erfindungsgemäßen Verfahren betreffen den Aufbau der ersten Lage des Gegenstandes. Im Gegensatz hierzu betreffen Schritte VI) bis X) den Aufbau aller weiteren Lagen. Der Unterschied liegt darin, dass zunächst eine Verbindung des Trägers mit den gebildeten vernetzten Volumina erfolgt und in allen weiteren Schritten die neu gebildeten vernetzten Volumina mit zuvor gebildeten, am Träger haftenden vernetzten Volumina verbunden werden.

In Schritt I) beziehungsweise VI) des Verfahrens wird eine Schicht auf einem Substrat bereitgestellt. Die Schicht enthält ein radikalisch vernetzbares Harz und bildet somit das Aufbaumaterial für den herzustellenden Gegenstand. Es ist erfindungsgemäß vorgesehen, dass das Harz eine Viskosität (23 °C, DIN EN ISO 2884-1) von ≥ 5 mPas bis ≤ 100000 mPas aufweist, wobei die Vorteile des erfindungsgemäßen Verfahrens bei höheren Viskositäten, insbesondere von ≥ 5000 mPas oder ≥ 10000 mPas, besonders zur Geltung kommen.

Die in Schritten I) beziehungsweise VI) aufgetragene Harzschicht alleine soll gemäß dem Konzept der Erfindung noch nicht durch Einwirkung von Energie unter den Bedingungen des erfindungsgemäßen Verfahrens radikalisch vernetzen können. Dazu ist es vorgesehen, dass die Schicht eine solche Zusammensetzung aufweist, dass das Harz unter den Bedingungen des Schritts IV) beziehungsweise des Schritts IX) keinen Zustand erreicht, in dem in einer dynamisch-mechanischen Analyse mit einem Platte/Platte-Oszillationsviskosimeter gemäß ISO 6721-10 bei 20 °C und einer Kreisfrequenz von 1/s der Betrag des Speichermoduls G' größer oder gleich dem Betrag des Verlustmoduls G" ist.

Dieses bedeutet, dass unter den Bedingungen, denen die Schicht insgesamt und damit auch das Harz in den Energieeinwirkungsschritten IV) und IX) - insbesondere Dauer und Intensität der Energieeinwirkung - das Harz nicht den Gelpunkt erreicht. Der Gelpunkt ist hierbei gemäß der fachüblichen Definition derjenige Zustand, in dem in einer dynamisch-mechanischen Analyse (DMA) wie vorstehend präzisiert der Betrag des Speichermoduls G' gleich dem Betrag des Verlustmoduls G" ist. Vor Erreichen des Gelpunkts ist der Betrag des Speichermoduls G' kleiner als der Betrag des Verlustmoduls G".

Diese Bedingung lässt sich beispielsweise erreichen, indem in der Schicht, welche neben dem Harz zwar noch Hilfs- und Zusatzstoffe enthalten kann, Initiatoren für eine radikalische Vernetzung fehlen. Eine Obergrenze, bis zu der keine technisch bedeutsame Vernetzung stattfindet, kann zum Beispiel 1 ppm, bezogen auf das Gewicht des Harzes, sein. Werden kommerzielle Harze eingesetzt, denen bereits ein Initiator hinzugefügt wurde und dessen Entfernung zu aufwendig oder nicht möglich wäre, kann die erfindungsgemäße Bedingung auch durch die Zugabe von Radikalinhibitoren in einer die Stoffmenge an Initiatoren übersteigenden Menge erfüllt werden und/oder in einer Zugabemenge von Radikalinhibitoren, so dass die Wirksamkeit der vorhandenen Initiatoren soweit gemindert wird, dass der Gelpunkt bei Energieeinwirkung in Schritten IV) und/oder IX) nicht erreicht wird. Das erfindungsgemäße Konzept sieht vor, dass erst durch räumlich gezielte Zugabe eines Initiators zu dem Harz in der Schicht die so modifizierten Bereiche die Möglichkeit erhalten, unter den Bedingungen der Schritte IV) beziehungsweise IX) bis zum oder über den Gelpunkt hinaus zu vernetzen und damit ein formstabiles Volumen zu bilden.

In Schritten II) und VII) erfolgt diese räumlich gezielte Zugabe des Initiators. Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung des Auftragens. Das Auftragen wird vorzugsweise mit einem Druckkopf, wie er in Tintenstrahldruckverfahren (Inkjet-Druck) eingesetzt wird, durchgeführt. Die aufgetragene Zusammensetzung umfassend den Initiator kann noch weitere Bestandteile wie inerte Lösungsmittel oder Reaktivverdünner enthalten. Die Zusammensetzung kann auf oder in die Schicht mit dem Harz aufgetragen werden, wobei das Auftragen auf die Oberfläche der Schicht bevorzugt ist.

Nach dem Auftragen diffundiert die Zusammensetzung umfassend den Initiator in die Harz umfassende Schicht, so dass die vernetzbaren Volumina mit radikalisch vernetzbarem Harz und Initiator für die radikalische Vernetzung gebildet werden. Die Viskosität (23 °C, DIN EN ISO 2884-1) der Zusammensetzung umfassend den Initiator ist zur Erleichterung der Diffusion vorzugsweise geringer als die Viskosität des Harzes.

In Schritten III) und VIII) werden die vernetzbaren Volumina durch den Träger beziehungsweise durch mit dem Träger verbundenen vorigen Lagen des Gegenstands kontaktiert. Dieser Kontakt bleibt bis nach erfolgter Vernetzung der vernetzbaren Volumina bestehen. Die Kontaktierungen schaffen auch die Voraussetzungen für das Ablösen der später gebildeten vernetzten Volumina.

In Schritten IV) und IX) erfolgt ein Einwirken von Energie auf die Schicht, welche vernetzbare Volumina und nicht vernetzbare restliche Bereiche enthält. In den vernetzbaren Volumina läuft aufgrund der Anwesenheit des Initiators eine radikalische Vernetzungsreaktion ab. In den restlichen Bereichen unterbleibt diese Reaktion.

In Schritten V) und X) werden die neu gebildeten vernetzten Volumina vom Träger abgelöst. Im einfachsten Fall bewegt sich der Träger vertikal auf und ab. Die Oberfläche des Trägers kann von der Oberfläche des Substrats verschieden sein, wobei die Haftung des vernetzten Volumens oder der Volumina am Substrat geringer als am Träger ist. Geeignete Materialien für das Substrat sind beispielsweise Materialien mit niedriger Oberflächenenergie wie PTFE sowie fluorierte oder silikonierte Oberflächen von Papieren, Metallen oder Polymeren. Ein geeignetes Material für den Träger ist zum Beispiel Stahl, Papier oder ein doppelseitiges Klebeband mit einer geeigneten Klebeschicht in Richtung zum Substrat. In einer bevorzugten Ausführungsform kann diese Klebeschicht nachträglich durch verschiedene bekannte Prozeduren wie Waschen, Abtragen, Lösen vom Produkt entfernt werden, in einer weiteren bevorzugten Ausführungsform verbleibt sie an den Kontaktstellen am Produkt.

Vorzugsweise beträgt in Schritt I) und/oder in Schritt VI) die Dicke der Schicht ≥1 µm bis ≤ 1000 µm. Vorzugsweise beträgt die Dicke der Schicht ≥10 µm bis ≤ 500 µm, mehr bevorzugt ≥20 µm bis ≤ 300 µm. Die Auflösung in der Aufbauebene (xy-Ebene) beträgt vorzugsweise ≤ 50 µm.

Das erfindungsgemäße Verfahren kann in der normalen Umgebungsatmosphäre oder aber auch in einer kontrollierten, klimatisierten Atmosphäre durchgeführt werden.

Die Löslichkeit des Initiators im Harz und die Zeitspanne zwischen Auftragen der Initiator umfassenden Zusammensetzung und Energieeintrag werden zweckmäßigerweise aneinander angepasst. In einer bevorzugten Ausführungsform ist die x- und y- Ausdehnung des vernetzbaren Volumens (wenn die Aufbaurichtung als z-Ausdehnung bezeichnet wird) größer als der Durchmesser des aufgetragenen Initiatorvolumens.

In einer weiteren bevorzugten Ausführungsform ist die z-Ausdehnung des vernetzbaren Volumens kleiner als die x- und y- Ausdehnung, insbesondere ≤ 95%, bevorzugt ≤ 90%, besonders bevorzugt ≤ 80% und ganz besonders bevorzugt ≤ 70% der Schichtdicke der Harzschicht.

In einer weiteren bevorzugten Ausführungsform wird die Initiator umfassende Zusammensetzung tropfenweise aufgetragen und die Tropfen werden so aufgetragen, dass eine Mehrzahl der Tropfen schon auf der Oberfläche der Harzschicht mindestens mit einem weiteren Tropfen verfließt.

In einer bevorzugten Ausführungsform ist die Oberflächenspannung des Harzes größer als die Oberflächenspannung der Initiator umfassenden Zusammensetzung. In einer besonders bevorzugten Ausführungsform beträgt die Oberflächenspannung des Harzes ≥ 30 mN/m und die der Initiator umfassenden Zusammensetzung ≤ 40 mN/m. In einer besonders bevorzugten Ausführungsform beträgt die Oberflächenspannung des Harzes ≥ 35 mN/m und die der Initiator umfassenden Zusammensetzung ≤ 30 mN/m. Die Oberflächenspannung kann durch Kontaktwinkelmessung gemäß DIN 55660 bestimmt werden.

In einer bevorzugten Ausführungsform wird durch die Initiator umfassende Zusammensetzung im Wechselspiel mit dem Inhibitor aus dem Harz und/oder zusätzlichem gezielt aufgetragenen Inhibitor ein Vernetzungsgradient erzeugt, der besonders vorteilhaft für die Lagenhaftung in z-Richtung ist und in x-, y-Richtung im Verhältnis zur Auflösung weniger ausgeprägt ist als in z-Richtung. So ist in z-Richtung ein Modulgradient von ≥ 1,5, bevorzugt ≥ 2, besonders bevorzugt ≥ 3 innerhalb einer Schichtdicke des vernetzten Volumens von ≤ 200 Mikrometer, bevorzugt ≤ 100 Mikrometer besonders bevorzugt ≤ 50 Mikrometer bevorzugt. In einer besonders bevorzugten Ausführungsform hat die unterste Schicht des vernetzten Volumens mit einem Massenanteil von ≤ 30%, bevorzugt ≤ 20%, besonders bevorzugt ≤ 15% des gesamt Volumens des vernetzten Volumens eine Viskosität < 10⁴ Pas und der Speichermodul G' ist kleiner als der Verlustmodul G".

In einer weiteren bevorzugten Ausführungsform weist das radikalisch vernetzbare Harz eine

Viskosität (23 °C, DIN EN ISO 2884-1) von ≥ 500 mPas bis ≤ 70000 mPas auf. Mehr bevorzugt ist eine solche Viskosität von ≥ 1000 mPas bis ≤ 50000 mPas. Weiter bevorzugt sind die folgenden Kombinationen der Viskositäten (23 °C, DIN EN ISO 2884-1) für Harz und Initiator umfassende Zusammensetzung:
Harz: ≥ 500 mPas bis ≤ 70000 mPas und
Initiator umfassende Zusammensetzung: ≥ 2 mPas bis ≤ 5000 mPas
Harz: ≥ 500 mPas bis ≤ 70000 mPas und
Initiator umfassende Zusammensetzung: ≥ 5 mPas bis ≤ 2000 mPas, wobei die Viskosität der Initiator umfassenden Zusammensetzung geringer als die des Harzes ist
Harz: ≥ 1000 mPas bis ≤ 50000 mPas und
Initiator umfassende Zusammensetzung: ≥ 10 mPas bis ≤ 1000 mPas
Harz: ≥ 1000 mPas bis ≤ 40000 mPas und
Initiator umfassende Zusammensetzung: ≥ 10 mPas bis ≤ 500 mPas, wobei die Viskosität der Initiator umfassenden Zusammensetzung geringer als die des Harzes ist

In einer weiteren bevorzugten Ausführungsform umfasst in Schritt I) und/oder Schritt VI) das radikalisch vernetzbare Harz funktionelle Gruppen, welche ausgewählt sind aus: Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon. Bevorzugt sind (Meth)Acrylat-Gruppen.

In einer weiteren bevorzugten Ausführungsform umfasst in Schritt I) und/oder Schritt VI) das radikalisch vernetzbare Harz ein Urethan(meth)acrylat.

In einer weiteren bevorzugten Ausführungsform umfasst in Schritt I) und/oder Schritt VI) das radikalisch vernetzbare Harz wenigstens eine isocyanatfunktionelle Verbindung, die wenigstens eine strahlenhärtende Gruppe ausgewählt aus: Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweist, (Komponente A) und wenigstens ein Polyol (Komponente B). Vorzugsweise enthält dieses radikalisch vernetzbare Harz weiterhin ein ungesättigtes Urethanacrylat, das keine Isocyanatgruppen trägt, (Komponente C) und wenigstens eine (Meth)Acrylatkomponente (Komponente D).

Die erfindungsgemäß einsetzbaren isocyanatfunktionellen Verbindungen sind beispielsweise aus Polyisocyanaten aufgebaut, wobei ein Teil der ursprünglich vorhandenen NCO-Gruppen mit hydroxyfunktionellen Verbindungen, die funktionelle Gruppen ausgewählt aus der Gruppe bestehend aus Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweisen, umgesetzt wurde, so dass das die isocyanatfunktionelle Verbindung Vinyl-, Propenyl-, Allyl-, Vinylether-, Maleinyl-, Fumaryl-, Maleinimid-, Dicyclopentadienyl-, Acrylamid- und/oder (Meth)Acrylat-Gruppen sowie Isocyanatgruppen trägt.

Als Polyisocyanate werden typischerweise aromatische, aliphatische und cycloaliphatische Polyisocyanate mit einem zahlenmittleren Molekulargewicht von unter 800 g/mol eingesetzt.

Beispielsweise geeignet sind Diisocyanate aus der Reihe 2,4-/2,6-Toluoldiisocyanat (TDI), Methylendiphenyldiisocyanat (MDI), Triisocyanatononan (TIN), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methylpentamethylendiisocyanat, 2,2,4-Trimethylhexamethylendiisocyanat (THDI), Dodecamethylendiisocyanat, 1 ,4-Diisocyanato-cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI) sowie aus diesen Verbindungen bestehende Gemische. Bevorzugte Ausgangsstoffe für die Herstellung der isocyanatfunktionellen Verbindungen sind Hexamethylendiisocyanat (HDI), Isophorondiisocyanat (IPDI) und/oder 4,4'- Diisocyanatodicyclohexylmethan.

Ebenfalls geeignet als Polyisocyanate sind Umsetzungsprodukte der vorgenannten Isocyanate mit sich selbst oder untereinander zu Uretdionen, oder Isocyanuraten. Beispielhaft genannt seien Desmodur^{®} N3300, Desmodur^{®} N3400 oder Desmodur^{®} N3600 (alle Covestro AG, Leverkusen, DE). Weiterhin geeignet sind auch Derivate von Isocyanaten, wie Allophanate oder Biurete. Beispielhaft genannt seien Desmodur^{®} N100, Desmodur^{®} N75MPA/BA oder Desmodur^{®} VPLS2102 (alle Covestro AG, Leverkusen, DE).

Beispiele hydroxylgruppenhaltiger Verbindungen, die strahlenhärtende Gruppen aufweisen, sind 2-Hydroxyethyl(meth)acrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxidmono(meth)acrylat (z.B. PEM63P, Laporte Performance Chemicals Ltd., UK), Poly(8-caprolacton)mono(meth)-acrylate wie z.B. Tone Ml 00^{®} (Dow, Schwalbach, DE), 2-Hydroxypropyl(meth)acrylat, 4-Hydroxybutyl(meth)acrylat, Hydroxybutylvinylether, 3-Hydroxy-2,2-dimethylpropyl(meth)acrylat, die hydroxyfunktionellen Mono-, Di- oder soweit möglich höheren Acrylate wie z.B. Glycerindi(meth)acrylat, Trimethylolpropandi(meth)acrylat, Pentaerythrittri(meth)acrylat oder Dipentaerythritpenta(meth)acrylat, die durch Umsetzung mehrwertiger gegebenenfalls alkoxylierter Alkohole wie Trimethylolpropan, Glycerin, Pentaerythrit, Dipentaerythrit zugänglich sind.

Ferner können als solche OH-funktionellen Verbindungen, die strahlenhärtende Gruppen aufweisen, auch die Umsetzungsprodukte von doppelbindungshaltigen Säuren mit gegebenenfalls doppelbindungshaltigen Epoxidverbindungen, wie die Umsetzungsprodukte von (Meth)Acrylsäure mit Glycidyl(meth)acrylat oder Bisphenol-A-diglycidylether, in der Urethanisierung eingesetzt werden.

Bevorzugt ist die isocyanatfunktionelle Verbindung, die wenigstens eine strahlenhärtende Gruppe ausgewählt aus der Gruppe bestehend aus Vinylether-, Maleinyl-, Fumaryl-, Maleinimid-, Dicyclopentadienyl-, Acrylamid-, (Meth)Acrylat-Gruppen oder einer Kombination aus mindestens zwei hiervon aufweist, ein isocyanatfunktionelles Urethanacrylat. Unter einem Urethanacrylat werden solche Verbindungen verstanden, die zumindest eine Isocyanatgruppe und wenigstens eine Acrylatgruppe pro Molekül aufweisen. Derartige Systeme sind an sich bekannt und besitzen die Eigenschaft, sowohl über eine NCO/OH Reaktion mit Polyolen oder Polyaminen, als auch über die Acrylatfunktion mittels UV-Licht oder Elektronenstrahlung radikalisch zu polymerisieren. Da zwei verschiedene Polymerisationsmechanismen bei diesen Verbindungen zum Tragen kommen werden Zusammensetzungen, die solche Verbindungen enthalten, auch als "dual-cure"-Systeme bezeichnet.

Die erfindungsgemäß einsetzbaren isocyanatfunktionellen Urethanacrylate sind beispielsweise aus Polyisocyanaten aufgebaut, wobei ein Teil der ursprünglich vorhandenen NCO-Gruppen mit hydroxyfunktionellen Acrylaten oder Methacrylaten umgesetzt wurde, sodass das Molekül endständige (Meth)Acrylatgruppen sowie Isocyanatgruppen trägt.

Dabei kommen als Ausgangsverbindung für isocyanatfunktionelle Urethanacrylate monomere Dioder Triisocyanate in Betracht. Beispiele für geeignete monomere Polyisocyanate sind 1,5-Naphthylendiisocyanat, 2,2'-, 2,4- und/oder 4,4'-Diphenylmethandiisocyanat (MDI), hydriertes MDI (H12MDI), Xylylendiisocyanat (XDI), Tetramethylxylylendiisocyanat (TMXDI), 4,4'-Diphenyldimethyl-methandiisocyanat, 4,4'-Dibenzyldiisocyanat, 1,3-Phenylendiisocyanat, 1,4-Phenylendiisocyanat, Toluylendiisocyanat (TDI), 1-Methyl-2,4-diisocyanato-cyclohexan, 1,6-Diisocyanato-2,2,4-trimethylhexan, 1 ,6-Diisocyanato-2,4,4-trimethylhexan, 1 -Isocyanatomethyl-3 - isocyanato-1,5,5-trimethylcyclohexan (IPDI), Tetramethoxybutan-1,4-diisocyanat, Hexan- 1,6-diisocyanat (HDI), Dicyclohexylmethandiisocyanat, Cyclohexan-1,4-diisocyanat, Ethylendiisocyanat, Trimethylhexamethylendiisocyanat, 1,4-Diisocyanatobutan, 1,12-Diisocyanatododecan, Dimerfettsäurediisocyanat, oder Uretdion-, Biuret- oder Isocyanurate von Diisocyanaten. Auch Isocyanat-Trimere können verwendet werden, wie sie beispielsweise in EP 1 002 818 B1 beschrieben sind.

Als hydroxyfunktionelle Acrylate oder Methacrylate kommen im Prinzip sämtliche denkbaren Verbindungen dieser Art zum Einsatz. Die Verbindungen enthalten mindestens einen einwertig Hydroxy-funktionellen Ester der (Meth)acrylsäure. Darunter sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 3-Hydroxypropyl oder 2-, 3oder 4-Hydroxybutyl-(meth)acrylat als auch beliebige Gemische aus derartigen Verbindungen. Außerdem kommen auch einwertige (Meth)Acryloylgruppen aufweisende Alkohole oder im Wesentlichen aus derartigen Alkoholen bestehende Umsetzungsprodukte in Betracht, die durch Veresterung von n- wertigen Alkoholen mit (Meth)Acrylsäure erhalten werden, wobei als Alkohole auch Gemische von unterschiedlichen Alkoholen eingesetzt werden können, so dass n für eine ganze oder in statistische Mittel gebrochene Zahl von größer 2 bis 4, vorzugsweise 3 steht, und wobei pro Mol der genannten Alkohole von (n-0,8) bis (n-1,2), vorzugsweise (n-1) Mol (Meth)Acrylsäure eingesetzt werden. Zu diesen Verbindungen bzw. Produktgemischen gehören beispielsweise die Umsetzungsprodukte von Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth)Acrylsäure im genannten Molverhältnis.

Zur Erzeugung erfindungsgemäß einsetzbarer Urethanacrylate ist es ebenso möglich, von einer polymeren Verbindung ausgewählt aus der Gruppe bestehend aus Polyester(meth)acrylaten, Polyether(meth)acrylaten, Polyetherester(meth)acrylaten, ungesättigten Polyestern mit Allyletherstruktureinheiten und Polyepoxy(meth)acrylaten auszugehen. Diese polymere Verbindung bildet das Polymerrückgrat und wird zur Erzeugung des Urethanacrylats mit Polyisocyanaten umgesetzt. Die Isocyanatgruppen der erhaltenen Urethanacrylate können dann gewünschtenfalls wiederum mit monomeren Verbindungen mit jeweils einer Hydroxyfunktion und mindestens einer (Meth)Acrylatgruppe umgesetzt werden, wodurch endständige Acrylatgruppen erzeugt werden. Wird nur ein Teil der Isocyanatgruppen umgesetzt, werden isocyanatfunktionelle Urethanacrylate erhalten. Werden die Isocyanatgruppen vollständig umgesetzt, wird ein ungesättigtes Urethanacrylat erzeugt.

In besonderer Ausgestaltung besitzt das isocyanatfunktionelle Urethanacrylat eine NCO-Funktionalität von 0,8 bis 6, bevorzugt 1 bis 4, weiter bevorzugt 1,2 bis 3, ganz besonders bevorzugt 1,5 bis 2,5 und insbesondere 2.

Was die Doppelbindungsfunktionalität des isocyanatfunktionellen Urethanacrylats betrifft, so kann diese über weite Bereiche variieren. Vorzugsweise beträgt die Doppelbindungsfunktionalität 0,5 bis 6, bevorzugt 1 bis 4, weiter bevorzugt 1,5 bis 3. Die Doppelbindungsfunktionalität definiert sich hierbei als statistische mittlere Anzahl an Doppelbindungen pro Molekül des isocyanatfunktionellen Urethanacrylats.

In weiter bevorzugter Weise weist das isocyanatfunktionelle Urethanacrylat ein mittleres Molekulargewicht von 150 bis 5000 auf, insbesondere von 300 bis 2500 g/mol.

Weiterhin enthält diese Harzzusammensetzung wenigstens ein Polyol (Komponente B). Zu diesem Zweck kann jedes Polyol eingesetzt werden, das im Stand der Technik beispielsweise zur Herstellung von Polyurethanpolymeren bekannt ist. Hierfür kommen insbesondere Polyetherpolyole, Polyesterpolyole, Polyetherpolyesterpolyole, Polycarbonatpolyole, Polyestercarbonatpolyole oder Polyethercarbonatpolyole in Frage. Weitere Beispiele sind aliphatische Alkohole und Polyole mit 1-6 OH-Gruppen pro Molekül und 2 bis etwa 30 C-Atomen. Geeignete aliphatische Polyole sind beispielsweise Ethylenglykol, Propandiol-1,2 oder -1,3, Butandiol-1,4, Butandiol-1,3, Butandiol-2,3, Butendiol-1,4, Pentandiol-1,5, Pentendiole, Hexandiol-1,6, Octandiol-1,8, Dodecandiol und höhere Homologe, Isomere und Gemische solcher Verbindungen. Ebenfalls geeignet sind höherfunktionelle Alkohole wie beispielsweise Glycerin, Trimethylolpropan, Pentaerythrit oder Zuckeralkohole, wie Sorbit oder Glucose, sowie oligomere Ether oder Umsetzungsprodukte mit Ethylen- oder Propylenoxid. Weiterhin können die Umsetzungsprodukte niedermolekularer, polyfunktioneller Alkohole mit Alkylenoxiden, sogenannte Polyetherpolyole, eingesetzt werden. Die Alkylenoxide weisen vorzugsweise zwei bis etwa vier C-Atome auf. Geeignet sind beispielsweise die Umsetzungsprodukte von Ethylenglykol, Propylenglykol, Glycerin, Trimethylolethan oder Trimethylolpropan, Pentaerythrit mit Ethylenoxid, Propylenoxid oder Butylenoxid oder Gemischen davon. Die genannten Alkohole können dabei selber auch "dual- funktional" sein, d.h. somit auch ungesättigte Doppelbindungen und Hydroxygruppen aufweisen, wobei die Doppelbindung z.B. durch teilweise Veresterung mit Acrylsäure oder Umsetzung mit Di- oder Polyisocyanaten und weitere Umsetzung - wie oben beschrieben - mit hydroxyfunktionellen Doppelbindungsträgern erhalten werden können. Das Molekulargewicht der Polyole kann über weite Bereiche variieren. Vorzugsweise liegt das Molekulargewicht (Mn) der Polyole bei etwa 50 bis 5000 g/mol (zahlenmittleres Molekulargewicht, Mn, wie durch GPC bestimmbar), insbesondere von 150 bis 2500 g/mol. Solche Polyole sind dem Fachmann bekannt und kommerziell erhältlich.

Bevorzugt werden alternativ oder zusätzlich zu den Alkoholen als Komponente B) auch weitere isocyanat-reaktive Verbindungen eingesetzt, gegebenenfalls in Gegenwart geeigneter Katalysatoren. Der Härtung von weiteren isocyanat-reaktiven Verbindungen erfolgt bevorzugt während oder bevorzugt nach mindestens einem der Schritte I) bis X) und wird gegebenenfalls thermisch aktiviert. Beispielhaft für weitere isocyanat-reaktive Verbindungen seien genannt Amine, Thiole, Epoxide und Säureanhydride.

Weiter bevorzugt werden die genannten isocyanat-reaktiven Verbindungen in Gegenwart geeigneter Katalysatoren und / oder thermisch aktiviert mit bekannten blockierten Isocyanaten umgesetzt. Im Besonderen sei hier die Umsetzung von Aminen mit blockierten abspalterfreien Isocyanatderivaten, wie in US 9676963 B2 beschrieben, zu nennen.

Insbesondere zeichnet sich die das Polyol durch eine OH-Funktionalität von 1 bis 6 aus, bevorzugt 1,5 bis 5, weiter bevorzugt 1,7 bis 4, besonders bevorzugt 1,8 bis 3,5 und ganz besonders bevorzugt 2.

Das ungesättigte Urethanacrylat (Komponente C) unterscheidet sich von dem isocyanatfunktionellen Urethanacrylat darin, dass es keine freien NCO-Gruppen trägt. Die erfindungsgemäß eingesetzten ungesättigten Urethanacrylate sind, wie auch die isocyanatfunktionellen Urethanacrylate, aus einem polyfunktionellen Isocyanat aufgebaut, wobei in Falle der ungesättigten Urethanacrylate sämtliche der Isocyanatgruppen mit einem hydroxyfunktionellen Acrylat oder Methacrylat umgesetzt sind. Auch die vorstehend bei den isocyanatfunktionellen Urethanacrylaten beschriebene Alternative mit einem polymeren Backbone aus Polyester(meth)acrylaten, Polyether(meth)acrylaten, Polyetherester(meth)acrylaten, ungesättigten Polyestern mit Allyletherstruktureinheiten und Polyepoxy(meth)acrylaten kann zur Anwendung kommen.

Was die für die ungesättigten Urethanacrylate einsetzbaren polyfunktionellen Isocyanate betrifft, so kommen hierfür grundsätzlich dieselben Verbindungen in Frage, die vorstehend zu den isocyanatfunktionellen Urethanacrylaten angegeben sind. Vorzugsweise sind die polyfunktionellen Isocyanate für die ungesättigten Urethanacrylate aus den aliphatischen polyfunktionellen Isocyanaten ausgewählt. Mit anderen Worten ist also ein ungesättigtes aliphatisches Urethanacrylat als Komponente C) bevorzugt. Diese Verbindungen sind besonders bevorzugt, weil sie die Flexibilität der erfindungsgemäß verwendeten Zusammensetzung nach dem Aushärten verbessern.

In weiterer Ausgestaltung der Erfindung weist das ungesättigte Urethanacrylat einen Anteil an OH-Gruppen auf. Die OH-Funktionalität ist in der Regel gering und kann beispielsweise 0,01 bis 1 betragen, bevorzugt 0,05 bis 0,8, weiter bevorzugt 0,08 bis 0,6, ganz besonders bevorzugt 0,09 bis 0,5 und insbesondere 0,1. Diese OH-Gruppen stehen ebenfalls für eine Reaktion mit NCO-Gruppen zur Verfügung.

In weiter bevorzugter Weise weist das ungesättigte Urethanacrylat ein mittleres Molekulargewicht von 200 bis 3000 auf, insbesondere von 300 bis 2000.

Die Doppelbindungsfunktionalität des ungesättigten Urethanacrylats kann über weite Bereiche variieren. Vorzugsweise beträgt die Doppelbindungsfunktionalität 1 bis 6, bevorzugt 2 bis 5 weiter bevorzugt 2,5 bis 4. Die Doppelbindungsfunktionalität definiert sich hierbei als statistische mittlere Anzahl an Doppelbindungen pro Molekül des ungesättigten Urethanacrylats.

Die (Meth)Acrylatkomponente (Komponente D) kann aus aliphatischen und/oder aromatischen Methacrylaten ausgewählt sein. Einsetzbare Alkyl(meth)acrylate sind beispielsweise lineare oder verzweigte monofunktionale ungesättigte (Meth)Acrylate nicht tertiärer Alkylalkohole, deren Alkylgruppen 4 bis 14 und insbesondere 4 bis 12 Kohlenstoffatome aufweisen. Beispiele solch niederer Alkylacrylate sind n-Butyl, n-Pentyl, n-Hexyl, Cyclohexyl, Isoheptyl, n-Nonyl, n-Decyl, Isohexyl, Isobornyl, 2-Ethyloctyl, Isooctyl, 2-Ethylhexyl, Tetrahydrofurfuryl, Ethoxyethoxyethyl, Phenoxyethyl, Cyclo-Trimethlypropan, 3,3,5-Trimethylcyclohexyl, t-Butylcyclohexyl, t-Butylacrylate und -methacrylate. Bevorzugte Alkylacrylate sind Isooctylacrylat, 2-Ethylhexylacrylat, 2- Ethyloctylacrylat, n-Butylacrylat, Tetrahydrofurfurylacrylat, Isobornylacrylat, Ethoxyethoxyethylacrylat, Phenoxyethylacrylat, 3,3,5-Trimethylcyclohexylacrylat sowie Cyclohexylacrylat.

Nach einer weiteren bevorzugten Ausführungsform ist die Komponente E ausgewählt aus der Gruppe umfassend UV- Initiatoren, thermisch aktivierbare Initiatoren und Redoxinitiatoren. Als photoaktivierbare Initiatoren können beispielsweise Benzoinether verwendet werden, wie Benzoinmethylether, Benzoinisopropylether, substituierte Benzoinether wie Anisoinmethylether, Acetophenone, wie 2,2-Diethoxyacetophenon, substituierte Acetophenone wie 2,2-Diethoxyacetophenon, 2,2-Dimethoxy-2-Phenylacetophenon und 1-Phenyl-2-Hydroxy-2-Methyl-1-Propanon, substituierte alpha-Ketole, wie 2-Methyl-2-Hydroxypropiophenon, aromatische Sulphonylchloride und photoaktive Oxime wie 1 -Phenyl-1,1-Propandion-2-(O-Ethoxycarbonyl) Oxim.

Als thermisch aktivierbare Initiatoren kommen organische Peroxide in Betracht, wie Ditertiärbutylperoxid, Benzoylperoxid und Laurylperoxid, sowie 2,2'-Azobis(isobutyronitril). Die Einsatzmengen der vorgenannten Initiatoren sind dem Fachmann grundsätzlich bekannt und betragen beispielsweise etwa 0,01 bis 8 Gew.-%, insbesondere 0,5 bis 5 Gew.-%, bevorzugt Ibis 3 Gew.-%.

Weiterhin kann die Zusammensetzung noch übliche Additive beinhalten. Hierfür kommen beispielsweise dem Fachmann bekannte Füllstoffe, Stabilisatoren, insbesondere UV-Stabilisatoren, Fungizide, Farbstoffe, Pigmente, Polymerisationskatalysatoren, Weichmacher und Lösungsmittel in Betracht. Als Polymerisationskatalysator können beispielsweise an sich bekannte Isocyanatadditionskatalysatoren verwendet werden, wie z. B Triethylamin, 1,4-Diazabicyclo-[2,2,2]-Oktan, Zinndioktoat, Dibutylzinndilaurat oder Bismuthoctoat.

Nach einer besonders bevorzugten Ausführungsform enthält das radikalisch vernetzbare Harz die Komponenten in den folgenden Mengen, wobei sich die Angaben in Gewichts-% zu 100 Gewichtes-% addieren:
Komponente A) 10 bis 79,9 Gew.-%, insbesondere 15 bis 75 Gew.-%,
Komponente B) 20 bis 89,9 Gew.-%, insbesondere 25 bis 85 Gew.-%,
Komponente C) 0 bis 50 Gew.-%, insbesondere 15 bis 30 Gew.-%,
Komponente D) 0 bis 35 Gew.-%, insbesondere 10 bis 25 Gew.-%

In einer weiteren bevorzugten Ausführungsform ist in Schritt II) und/oder Schritt VII) der Initiator für eine radikalische Vernetzung des Harzes ausgewählt aus: UV-aktivierbare Initiatoren, thermisch aktivierbare Initiatoren, Redoxinitiatoren und einer Kombination aus mindestens zwei hiervon. Als photoaktivierbare Initiatoren können beispielsweise Benzoinether verwendet werden, wie Benzoinmethylether, Benzoinisopropylether, substituierte Benzoinether wie Anisoinmethylether, Acetophenone, wie 2,2-Diethoxyacetophenon, substituierte Acetophenone wie 2,2-Diethoxyacetophenon, 2,2-Dimethoxy-2-Phenylacetophenon und 1-Phenyl-2-Hydroxy-2-Methyl-1-Propanon, substituierte alpha-Ketole, wie 2-Methyl-2-Hydroxypropiophenon, aromatische Sulphonylchloride und photoaktive Oxime wie 1-Phenyl-1,1-Propandion-2-(O-Ethoxycarbonyl) Oxim.

Als thermisch aktivierbare Initiatoren kommen organische Peroxide in Betracht, wie Ditertiärbutylperoxid, Benzoylperoxid und Laurylperoxid, sowie 2,2'-Azobis(isobutyronitril).

In einer weiteren bevorzugten Ausführungsform erfolgt in Schritt IV) und/oder Schritt IX) das Einwirken von Energie durch Bestrahlen mit UV-Licht. Geeignet ist insbesondere UV-Licht mit einer Wellenlänge von ≥ 250 nm und ≤ 420 nm, besonders geeignet von ≥ 300 nm und ≤ 400 nm. In einer weiteren bevorzugten Ausführungsform ist das Substrat bezüglich der in Schritt IV) und/oder Schritt IX) einwirkenden Energie zumindest teilweise transparent.

In einer weiteren bevorzugten Ausführungsform wird benachbart zu vernetzbaren ein Absorber für die in Schritt IV) und/oder Schritt IX) einwirkende Energie und/oder ein Inhibitor für die radikalische Vernetzung des Harzes aufgetragen. Hierdurch kann die Randschärfe der gebildeten Volumina erhöht werden.

In einer weiteren bevorzugten Ausführungsform wird das Kontaktieren in Schritt III) und/oder Schritt VIII) derart durchgeführt, dass eine Relativbewegung des Trägers zum Substrat durchgeführt wird, der Abstand zwischen Träger und Substrat und/oder zwischen Träger und Oberfläche der Schicht überwacht wird und die Relativbewegung bei Unterschreiten eines vorbestimmten Abstandes unterbrochen wird. Die Überwachung des Abstands kann beispielsweise mittels Ultraschall-Entfernungsmessung oder mittels kalibrierter Wegstreckengeber für die Bewegung des Trägers erfolgen. Eine weitere Unterschreitung des Abstands zwischen Stempel und Substrat oder Oberfläche der Harzschicht hätte eine Kompression der zuvor gebildeten Volumina zur Folge, was feine Strukturen zerstören könnte.

In einer weiteren bevorzugten Ausführungsform wird das Kontaktieren in Schritt III) und/oder Schritt VIII) derart durchgeführt, dass eine Relativbewegung des Trägers zum Substrat durchgeführt wird, der Anpressdruck zwischen Träger und Substrat und/oder zwischen Träger und Oberfläche der Schicht überwacht wird und die Relativbewegung bei Überschreiten eines vorbestimmten Anpressdrucks unterbrochen wird. Die Überwachung des Anpressdrucks kann beispielsweise mittels Druckmessung am Träger erfolgen. Eine weitere Überschreitung des Anpressdrucks zwischen Träger und Substrat oder Oberfläche der Harzschicht hätte eine Kompression der zuvor gebildeten Volumina zur Folge, was feine Strukturen zerstören könnte. Der erreichte durchschnittliche Druck über die gesamte kontaktierte Fläche kann typischerweise zwischen 0.001 bar und 0.01 bar liegen.

In einer weiteren bevorzugten Ausführungsform werden die Schritte IV) und/oder IX) derart durchgeführt, dass das mindestens eine erhaltene vernetzte Volumen nicht das Substrat kontaktiert. Dieses erfolgt vorzugsweise dadurch, dass in den Auftragsschritten II) und/oder VII) die Initiator umfassende Zusammensetzung so aufgetragen wird, dass die gebildeten vernetzbaren Volumina nicht das Substrat kontaktieren. Wenn zwischen vernetztem Volumen oder Volumina und dem Substrat noch unvernetztes Harz vorliegt, wird die Haftung zwischen dem Volumen oder den Volumina und dem Substrat praktisch nichtexistent. Dieses vereinfacht das Ablösen vom Substrat erheblich.

In einer weiteren bevorzugten Ausführungsform ist das Substrat als bewegliches Förderband mit einer die Schicht tragenden Seite ausgebildet. Dieses ermöglicht einen kontinuierlichen oder quasi-kontinuierlichen Betrieb des erfindungsgemäßen Verfahrens.

In einer weiteren bevorzugten Ausführungsform wird in den einzelnen Schritten VII) eine Mehrzahl von voneinander verschiedenen radikalisch vernetzbaren Harzen eingesetzt. Dieses kann beispielsweise dadurch erfolgen, dass die verschiedenen Harze nebeneinander auf einem Förderband vorgelegt werden und im Verfahren zwischen den einzelnen Harzbereichen hin- und hergewechselt wird.

In einer weiteren bevorzugten Ausführungsform erfolgt in Schritt I) und/oder Schritt VI) das Bereitstellen der Schicht auf dem Substrat derart, dass die bereitgestellte Schicht zuzüglich erweiterter Ränder dem ausgewählten Querschnitt des Gegenstands entspricht. So kann das ganze Substrat nicht flächendeckend mit Harz beschichtet werden, sondern nur ausgewählte Bereiche, die in einer weiteren bevorzugten Ausführungsform mit den im späteren Kontaktierungsschritt gewünschten Bereichen übereinstimmen.

Bevorzugt wird der Gegenstand nach Abschluss der Schritte I) bis X) über weitere Energiezufuhr, beispielsweise mittels Strahlung oder thermisch nachgehärtet. Diese ist besonders von Vorteil, um die radikalische Aushärtung zu vervollständigen und damit den Anteil möglicher Monomerer Verbindungen zu minimieren. Weiterhin kann hierdurch im Falle einer oben beschriebenen dual-cure Formulierung die Aushärtung von Isocyanatgruppen mit Alkoholen schneller abgeschlossen werden.

Weiterhin bevorzugt werden neben Isocyanat basierten dual-cure Systemen auch beliebige andere dual-cure Systeme eingesetzt, die mit der oben beschriebenen Reaktionsfolge einer ersten radikalischen Vernetzung zu an mindestens einer Stelle verbundenen interpenetrierenden Netzwerken reagieren.

Die vorliegende Erfindung betrifft weiterhin ein System zur Durchführung des erfindungsgemäßen Verfahrens, umfassend:
- eine Steuerungseinheit;
- ein Substrat;
- eine erste Applikationseinheit zum Bereitstellen einer Schicht auf einem Substrat, wobei die Schicht ein radikalisch vernetzbares Harz mit einer Viskosität (23 °C, DIN EN ISO 2884-1) von ≥ 5 mPas bis ≤ 100000 mPas enthält und die Schicht eine solche Zusammensetzung aufweist, dass das Harz unter den Bedingungen des Schritts IV) und/oder VIII) des erfindungsgemäßen Verfahrens keinen Zustand erreicht, in dem in einer dynamisch-mechanischen Analyse mit einem Platte/Platte-Oszillationsviskosimeter gemäß ISO 6721-10 bei 20 °C und einer Kreisfrequenz von 1/s der Betrag des Speichermoduls G' größer oder gleich dem Betrag des Verlustmoduls G" ist;
- eine zweite Applikationseinheit zum Auftragen einer Zusammensetzung umfassend einen Initiator für eine radikalische Vernetzung des Harzes, entsprechend einem ausgewählten Querschnitt des Gegenstands, auf oder in die Schicht;
- eine Energie-Einwirkungseinheit zum Einwirken von Energie auf wenigstens den Teil der Schicht, welcher den Initiator für die radikalische Vernetzung des Harzes enthält;
- eine Kontaktierungseinheit zum Kontaktieren von durch die Energie-Einwirkungseinheit radikalisch vernetzten Volumina und zum Entfernen dieser Volumina vom Substrat;
wobei die zweite Applikationseinheit das Auftragen auf Anweisung der Steuerungseinheit durchführt und die Kontaktierungseinheit das Kontaktieren auf Anweisung der Steuerungseinheit durchführt.

In einer bevorzugten Ausführungsform ist das Substrat als bewegliches Förderband mit einer eine Schicht mit dem radikalisch vernetzbaren Harz tragenden Seite ausgebildet und diese Seite weist eine Bewegungsrichtung auf, die Energie-Einwirkungseinheit ist als Bestrahlungseinheit ausgebildet, die zweite Applikationseinheit ist in Bewegungsrichtung des Substrats gesehen vor der Energie-Einwirkungseinheit angeordnet und die Energie-Einwirkungseinheit ist in Bezug auf das Substrat gegenüber der Kontaktierungseinheit angeordnet.

Solch eine Konfiguration kann im kontinuierlichen oder quasi-kontinuierlichen Betrieb eingesetzt werden. In einem quasi-kontinuierlichen Betrieb kann das Förderband für die Bestrahlungs- und die Kontaktierungsschritte angehalten werden und nach Abschluss dieser Schritte sich weiterbewegen. Ein kontinuierlicher Betrieb kann durch bewegliche Bestrahlungs- und Kontaktierungseinheiten erreicht werden, welche sich mit der gleiche Geschwindigkeit und in der gleichen Richtung wie das Förderband während der Bestrahlungs- und Kontaktierungsschritte bewegen.

In einer bevorzugten Ausführungsform der beschriebenen Erfindung können > 60 %, bevorzugt > 70%, bevorzugt > 80%, besonders bevorzugt > 90% des eingesetzten Harzes wiederverwendet werden, da es einer deutlich geringeren und kurzfristigeren thermischen Belastung und/oder Strahlungsbelastung ausgesetzt ist als in klassischen Digital Light Processing (DLP) und Stereolithographie (SLA) Prozessen und keinen Initiator für eine radikalische Vernetzung enthält.

In einer bevorzugten Ausführungsform kann der Vorgang bei Umgebungsluft durchgeführt werden, da oxidative Prozesse durch die kürzere thermische Belastung in viel geringerem Maße relevant sind weshalb Verfärbungen und andere unerwünschte Veränderung des Materials in viel geringerem Umfang vorkommen.

Die vorliegende Erfindung wird anhand der nachfolgenden Figuren näher erläutert, ohne jedoch darauf beschränkt zu sein. Es zeigen:
FIG. 1-10 Schritte des erfindungsgemäßen Verfahrens
FIG. 11 ein erfindungsgemäßes System

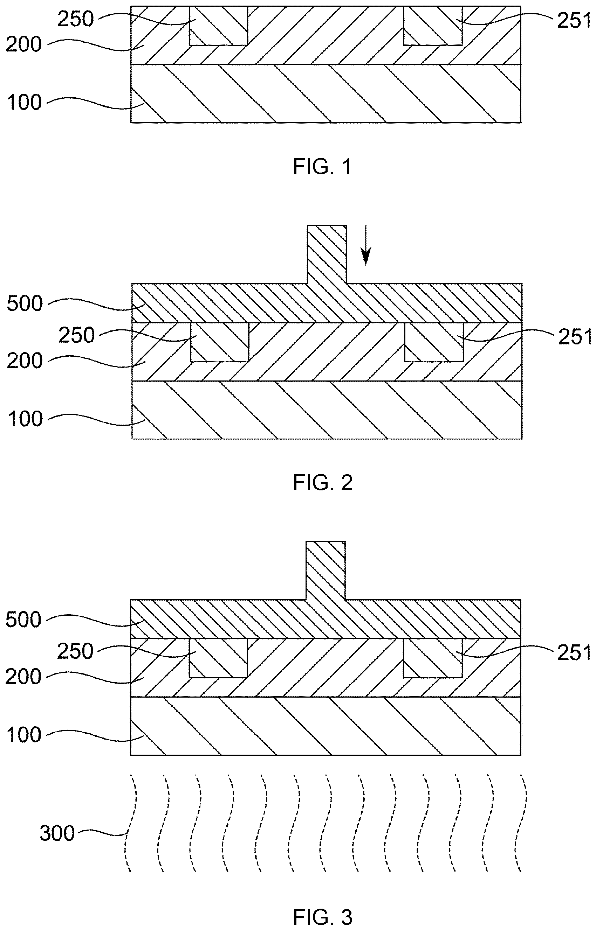

FIG. 1 zeigt schematisch den Zustand nach Schritt II) des erfindungsgemäßen Verfahrens, in welchem der Aufbau der ersten Schicht des herzustellenden Gegenstandes initiiert wird. Eine Schicht mit einem radikalisch vernetzbaren Harz 200 wird gemäß Schritt I) auf ein Substrat 100. Dieses kann durch Aufrakeln des Harzes erfolgen. Das Harz weist eine Viskosität (23 °C, DIN EN ISO 2884-1) von ≥ 5 mPas bis ≤ 100000 mPas auf und ist, wie vorstehend beschrieben, derart ausgewählt, dass es unter den Bedingungen des Schritts IV) nicht den Gelpunkt erreicht oder überschreitet.

Anschließend wird gemäß Schritt II), wie in FIG. 1 dargestellt, eine Initiator umfassende Zusammensetzung, entsprechend einem ersten ausgewählten Querschnitt des Gegenstands, auf die Harzschicht 100 aufgetragen. Diese Zusammensetzung diffundiert in die Harzschicht 200 hinein und bildet so die vernetzbaren Volumina 250 und 251. Die Initiator umfassende Zusammensetzung wird so aufgetragen, dass die gebildeten vernetzbaren Volumina 250 und 251 nicht das Substrat 100 kontaktieren.

FIG. 2 zeigt das Kontaktieren der vernetzbaren Volumina 250 und 251 mit dem Träger 500 (Schritt III)), indem der Träger sich von oben kommend in Richtung Substrat 100 bewegt. Der Träger kontaktiert ebenfalls die verbliebene Oberfläche der Harzschicht 200. Dieses ist jedoch unschädlich, da es an diesen Stellen nicht zu einer radikalischen Vernetzung des Harzes und somit zu einer Anhaftung am Träger 500 kommen kann.

Im nächsten Schritt IV) des Verfahrens wird die Harzschicht 200 einschließlich der vernetzbaren Volumina 250 und 250 der in FIG. 3 als UV-Lichtstrahlen 300 dargestellten Energie ausgesetzt. Die nicht dargestellte Lichtquelle für die Lichtstrahlen 300 befindet sich auf derjenigen Seite des Substrats 100, welche der Harzschicht 200 abgewandt ist. Damit die Lichtstrahlen 300 die vernetzbaren Volumina 250 und 251 erreichen können, ist das Substrat 100 hinreichend transparent ausgebildet.

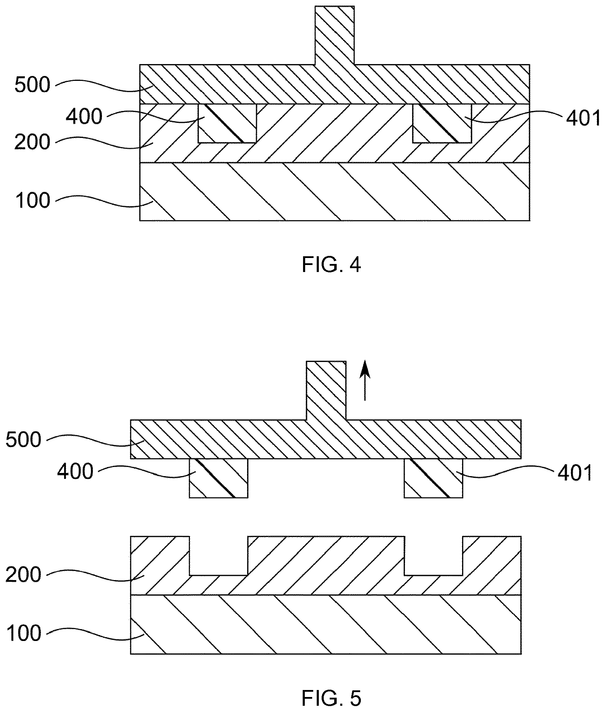

Durch die Einwirkung der UV-Lichtstrahlen wurden aus den vernetzbaren Volumina 250 und 251 die vernetzten Volumina 400 und 401 gebildet. Dort, wo in den vorigen Schritten kein Initiator auf die Harzschicht aufgetragen wurde, trat keine Vernetzung in der Harzschicht 200 auf. Die vernetzten Volumina 400 und 401 haften am Träger 500. Dieses ist in FIG. 4 abgebildet.

In Schritt V) des Verfahrens/FIG. 5 wird der Träger 500 einschließlich der mit ihm verbundenen vernetzten Volumina von dem Substrat 500 entfernt. In dem in FIG. 5 dargestellten Fall wird der Träger 500 nach oben wegbewegt. Dadurch, dass in den vorigen Schritten die vernetzbaren Volumina 250 und 251 nicht das Substrat kontaktiert haben, haften die die vernetzten Volumina 400 und 401 nicht am Substrat 100. Dann kann der Träger 500 einschließlich der vernetzten Volumina 400 und 401 ohne Schwierigkeiten vom Substrat fortbewegt werden.

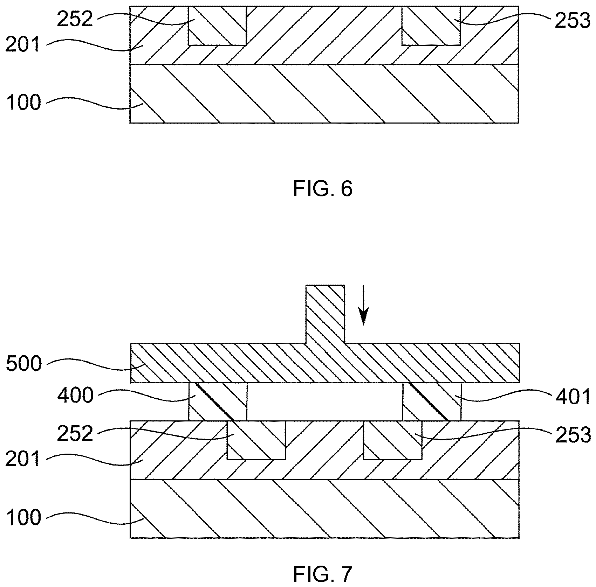

Nachdem die erste Querschnittslage des zu bildenden Gegenstands am Träger 500 angebracht wurde, können weitere Lagen aneinander angefügt werden, bis der zu bildende Gegenstand fertiggestellt ist. Diese Schritte sind in FIG. 6 bis 10 dargestellt.

Gemäß FIG. 6/Schritt VI) wird zunächst eine neue vollständige Harzschicht 201 auf dem Substrat 100, beispielsweise wieder durch Aufrakeln, bereitgestellt. Das Harz weist eine Viskosität (23 °C, DIN EN ISO 2884-1) von ≥ 5 mPas bis ≤ 100000 mPas auf und ist, wie vorstehend beschrieben, derart ausgewählt, dass es unter den Bedingungen des Schritts IX) nicht den Gelpunkt erreicht oder überschreitet. Dann wird gemäß Schritt VII) erneut eine Initiator umfassende Zusammensetzung, entsprechend einem weiteren ausgewählten Querschnitt des Gegenstands, auf die Harzschicht 100 aufgetragen. Diese Zusammensetzung diffundiert in die Harzschicht 201 hinein und bildet so die vernetzbaren Volumina 252 und 253. Die Initiator umfassende Zusammensetzung wird so aufgetragen, dass die gebildeten vernetzbaren Volumina 252 und 253 nicht das Substrat 100 kontaktieren.

In FIG. 7/Schritt VIII) wird der Träger 500 wieder in Richtung Substrat 100 abgesenkt, bis die schon gebildeten vernetzten Volumina 400 und 401 die neuen vernetzbaren Volumina 252 und 253 kontaktieren.

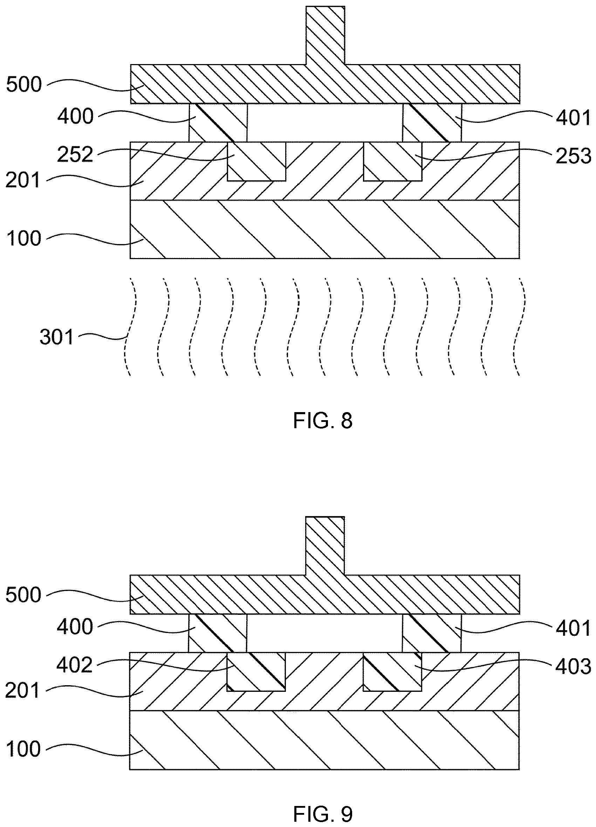

Die Vernetzung der Volumina 252 und 253 durch Einwirkung von UV-Licht 301 gemäß Schritt IX) ist in FIG. 8 gezeigt. Die neu gebildeten vernetzten Volumina 402 und 403 (FIG. 9) sind aufgrund des Kontakts vor ihrer Vernetzung mit den zuvor gebildeten Volumina 400 und 401 verbunden.

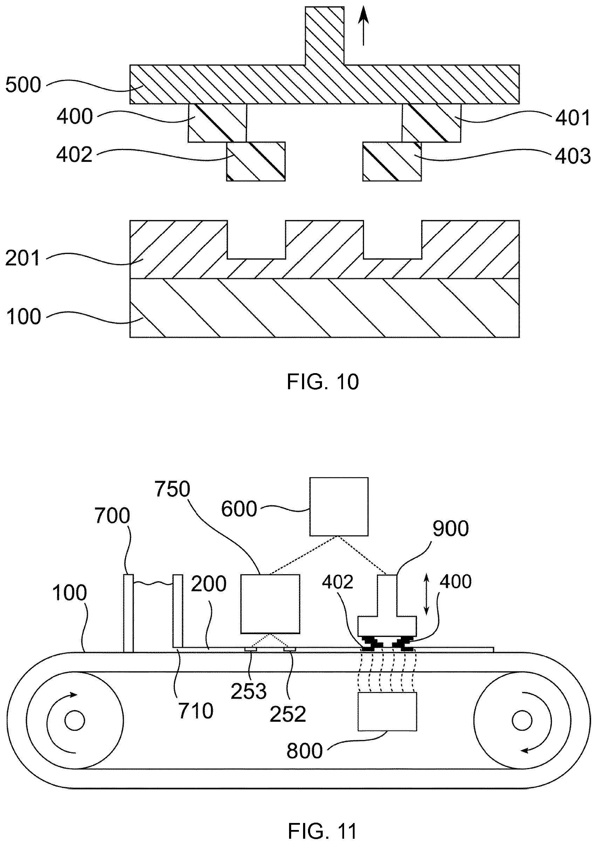

In Schritt X) des Verfahrens/FIG. 10 wird der Träger 500 einschließlich der mit ihm verbundenen vernetzten Volumina von dem Substrat 100 entfernt. Dadurch, dass in den vorigen Schritten die vernetzbaren Volumina 252 und 253 nicht das Substrat kontaktiert haben, haften die die vernetzten Volumina 402 und 403 nicht am Substrat 100. Dann kann der Träger 500 einschließlich des Gebildes mit vernetzten Volumina 400, 401, 402 und 403 ohne Schwierigkeiten vom Substrat fortbewegt werden.

FIG. 11 zeigt ein erfindungsgemäßes System. In dem System ist das Substrat 100 als bewegliches, umlaufendes Förderband ausgebildet. Die Bewegungsrichtung der nach oben gewandten Seite des Substrats 100 ist in der Figur von links nach rechts.

Die erste Applikationseinheit 700 dient auch als Vorratsbehälter für das radikalisch vernetzbare Harz. Über einen Spalt 710 gelangt das Harz auf das sich bewegende Substrat 100 und bildet so die Harzschicht 200. Über die Höhe des Spalts 710 lässt sich die Höhe der Harzschicht steuern.

Die zweite Applikationseinheit 705 trägt, auf Anweisung von Befehlen aus der Steuerungseinheit 600, eine Zusammensetzung mit einem Initiator für eine radikalische Vernetzung des Harzes auf die Harzschicht 200 auf. Hierdurch werden, nach der Diffusion des Initiators in das Harz, die vernetzbaren Volumina 252 und 253 gebildet.

Durch die Bewegung des Substrats 100 werden diese vernetzbaren Volumina weiter transportiert, bis sie zwischen die als UV-Belichtungseinheit ausgestaltete Energie-Einwirkungseinheit 800 und der Kontaktierungseinheit 900 gelangen. Der bidirektionale Fluss von Befehlen und Regelungsdaten ist durch die gestrichelte Linie zwischen Steuerungseinheit 600 und Bestrahlungseinheit 800 sowie Kontaktierungseinheit 900 dargestellt. Die Kontaktierungseinheit enthält neben Steuerungselektronik und Antrieben für eine Bewegung auch einen in FIG. 1 bis 10 mit dem Bezugszeichen 500 bezeichneten Träger. Dieser ist zur besseren Übersicht in FIG. 11 nicht gesondert dargestellt worden.

Die als Stempel ausgebildete Kontaktierungseinheit 900 kann sich auf Anweisung von Befehlen aus der Steuerungseinheit 600 auf und ab bewegen und so die unter ihr befindlichen vernetzbaren Volumina kontaktieren. Wenn die vernetzbaren Volumina unterhalb der Kontaktierungseinheit 900 angelangt sind bewegt sich die Kontaktierungseinheit 900 zumindest mit den zur Kontaktierung vorgesehenen Teilen wie einem Träger herab.

Nach der Kontaktierung der vernetzbaren Volumina mit, wie hier dargestellt, zuvor gebildeten Volumina 400 erfolgt eine Bestrahlung des Harzes durch die Bestrahlungseinheit 800. Neu gebildete vernetzte Volumina 400 haften an zuvor gebildeten Volumina und können bei einer Aufwärtsbewegung der Kontaktierungseinheit 900 vom Substrat entfernt werden.

Die nicht mit einem Initiator versehenen Anteile der Harzschicht 200 können durch die Bewegung des Substrats 100, gegebenenfalls in Kombination mit einer nicht dargestellten Rakel, in einen Auffangbehälter transportiert. Dann kann das Harz, gegebenenfalls nach einem Filtrationsprozess, der verklumpte Anteile aussortiert, einer Wiederverwertung zugeführt werden, insbesondere indem es in die Applikationseinheit 700 umgefüllt wird.

## Patentansprüche

1. Verfahren zur Herstellung eines Gegenstandes, umfassend die Schritte:
I) Bereitstellen einer Schicht (200) auf einem Substrat (100), wobei die Schicht (200) ein radikalisch vernetzbares Harz mit einer Viskosität (23 °C, DIN EN ISO 2884-1) von ≥ 5 mPas bis ≤ 100000 mPas enthält und die Schicht eine solche Zusammensetzung aufweist, dass das Harz unter den Bedingungen des Schritts IV) keinen Zustand erreicht, in dem in einer dynamisch-mechanischen Analyse mit einem Platte/Platte-Oszillationsviskosimeter gemäß ISO 6721-10 bei 20 °C und einer Kreisfrequenz von 1/s der Betrag des Speichermoduls G' größer oder gleich dem Betrag des Verlustmoduls G" ist;
II) Auftragen einer Zusammensetzung umfassend einen Initiator für eine radikalische Vernetzung des Harzes, entsprechend einem ersten ausgewählten Querschnitt des Gegenstands, auf oder in die Schicht (200), so dass mindestens ein vernetzbares Volumen (250, 251) umfassend radikalisch vernetzbares Harz und Initiator für eine radikalische Vernetzung des Harzes, entsprechend dem ersten ausgewählten Querschnitt des Gegenstands, gebildet wird;
III) Kontaktieren des mindestens einen in Schritt II) gebildeten vernetzbaren Volumens (250, 251) mit einem Träger (500);
IV) Einwirken von Energie auf die Schicht (200), so dass aus dem mindestens einen vernetzbaren Volumen (250, 251) mindestens ein vernetztes Volumen (400, 401), entsprechend dem ersten ausgewählten Querschnitt des Gegenstands, gebildet wird und das mindestens eine vernetzte Volumen (400, 401) mit dem Träger (500) verbunden wird;
V) Entfernen des Trägers (500) einschließlich des mindestens einen mit dem Träger (500) verbundenen vernetzten Volumens (400, 401) von dem Substrat (100);
VI) Bereitstellen einer weiteren Schicht (201) auf dem Substrat (100), wobei die Schicht (201) ein radikalisch vernetzbares Harz mit einer Viskosität (23 °C, DIN EN ISO 2884-1) von ≥ 5 mPas bis ≤ 100000 mPas enthält und die Schicht eine solche Zusammensetzung aufweist, dass das Harz unter den Bedingungen des Schritts IX) keinen Zustand erreicht, in dem in einer dynamisch-mechanischen Analyse mit einem Platte/Platte-Oszillationsviskosimeter gemäß ISO 6721-10 bei 20 °C und einer Kreisfrequenz von 1/s der Betrag des Speichermoduls G' größer oder gleich dem Betrag des Verlustmoduls G" ist;
VII) Auftragen einer Zusammensetzung umfassend einen Initiator für eine radikalische Vernetzung des Harzes, entsprechend einem weiteren ausgewählten Querschnitt des Gegenstands, auf oder in die Schicht (201), so dass mindestens ein vernetzbares Volumen (252, 253) umfassend radikalisch vernetzbares Harz und Initiator für eine radikalische Vernetzung des Harzes, entsprechend einem weiteren ausgewählten Querschnitt des Gegenstands, gebildet wird;
VIII) Kontaktieren des mindestens einen in Schritt VI) gebildeten vernetzbaren Volumens (252, 253) mit mindestens einem zuvor mit dem Träger (500) verbundenen vernetzten Volumen (400, 401);
IX) Einwirken von Energie auf die weitere Schicht (201), so dass aus dem mindestens einen vernetzbaren Volumen (252, 253) mindestens ein vernetztes Volumen (402, 403), entsprechend dem weiteren ausgewählten Querschnitt des Gegenstands, gebildet wird und das mindestens eine vernetzte Volumen (402, 403) mit mindestens einem der zuvor mit dem Träger (500) verbundenen vernetzten Volumina (400, 401) verbunden wird;
X) Entfernen des Trägers (500) einschließlich der mit dem Träger (500) verbundenen vernetzten Volumina (400, 401, 402, 403) von dem Substrat (100);
XI) Wiederholen der Schritte VI) bis X), bis der Gegenstand gebildet ist.

2. Verfahren gemäß Anspruch 1, **dadurch gekennzeichnet, dass** das radikalisch vernetzbare Harz eine Viskosität (23 °C, DIN EN ISO 2884-1) von ≥ 500 mPas bis ≤ 70000 mPas aufweist.

3. Verfahren gemäß Anspruch 1 oder 2, **dadurch gekennzeichnet, dass** in Schritt I) und/oder Schritt VI) das radikalisch vernetzbare Harz funktionelle Gruppen umfasst, welche ausgewählt sind aus Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon.

4. Verfahren gemäß Anspruch 3, **dadurch gekennzeichnet, dass** in Schritt I) und/oder Schritt VI) das radikalisch vernetzbare Harz ein Urethan(meth)acrylat umfasst.

5. Verfahren gemäß Anspruch 3 oder 4, **dadurch gekennzeichnet, dass** in Schritt I) und/oder Schritt VI) das radikalisch vernetzbare Harz wenigstens eine isocyanatfunktionelle Verbindung umfasst, die wenigstens eine strahlenhärtende Gruppe ausgewählt: Vinyl-, Propenyl-, Allyl-, Vinylether-, Maleinyl-, Fumaryl-, Maleinimid-, Dicyclopentadienyl-, Acrylamid- und (Meth)Acrylat-Gruppen oder einer Kombination aus mindestens zwei hiervon aufweist, (Komponente A) und wenigstens ein Polyol (Komponente B) umfasst.

6. Verfahren gemäß einem der Ansprüche 1 bis 5, **dadurch gekennzeichnet, dass** in Schritt II) und/oder Schritt VII) der Initiator für eine radikalische Vernetzung des Harzes ausgewählt ist aus: UV-aktivierbare Initiatoren, thermisch aktivierbare Initiatoren, Redoxinitiatoren und einer Kombination aus mindestens zwei hiervon.

7. Verfahren gemäß einem der Ansprüche 1 bis 6, **dadurch gekennzeichnet, dass** in Schritt IV) und/oder Schritt IX) das Einwirken von Energie durch Bestrahlen mit UV-Licht erfolgt.

8. Verfahren gemäß einem der Ansprüche 1 bis 7, **dadurch gekennzeichnet, dass** das Substrat (100) bezüglich der in Schritt IV) und/oder Schritt IX) einwirkenden Energie zumindest teilweise transparent ist.

9. Verfahren gemäß einem der Ansprüche 1 bis 8, **dadurch gekennzeichnet, dass** benachbart zu vernetzbaren Volumina (250, 251, 252, 253) ein Absorber für die in Schritt IV) und/oder Schritt IX) einwirkende Energie und/oder ein Inhibitor für die radikalische Vernetzung des Harzes aufgetragen wird.

10. Verfahren gemäß einem der Ansprüche 1 bis 9, **dadurch gekennzeichnet, dass** das Kontaktieren in Schritt III) und/oder Schritt VIII) derart durchgeführt wird, dass eine Relativbewegung des Trägers (500) zum Substrat (100) durchgeführt wird, der Abstand zwischen Träger (500) und Substrat (100) und/oder zwischen Träger (500) und Oberfläche der Schicht (200, 201) überwacht wird und die Relativbewegung bei Unterschreiten eines vorbestimmten Abstandes unterbrochen wird.

11. Verfahren gemäß einem der Ansprüche 1 bis 10, **dadurch gekennzeichnet, dass** das Kontaktieren in Schritt III) und/oder Schritt VIII) derart durchgeführt wird, dass eine Relativbewegung des Trägers (500) zum Substrat (100) durchgeführt wird, der Anpressdruck zwischen Träger (500) und Substrat (100) und/oder zwischen Träger (500) und Oberfläche der Schicht (200, 201) überwacht wird und die Relativbewegung bei Überschreiten eines vorbestimmten Anpressdrucks unterbrochen wird.

12. Verfahren gemäß einem der Ansprüche 1 bis 11, **dadurch gekennzeichnet, dass** die Schritte IV) und/oder IX) derart durchgeführt werden, dass das mindestens eine erhaltene vernetzte Volumen (400, 401, 402, 403) nicht das Substrat (100) kontaktiert.

13. Verfahren gemäß einem der Ansprüche 1 bis 12, **dadurch gekennzeichnet, dass** das Substrat (100) als bewegliches Förderband mit einer die Schicht (200, 201) tragenden Seite ausgebildet ist.

14. Verfahren gemäß einem der Ansprüche 1 bis 13, **dadurch gekennzeichnet, dass** in den einzelnen Schritten VII) eine Mehrzahl von voneinander verschiedenen radikalisch vernetzbaren Harzen eingesetzt wird.

15. System zur Durchführung des Verfahrens gemäß einem der Ansprüche 1 bis 14, umfassend:
- eine Steuerungseinheit (600);
- ein Substrat (100);
- eine erste Applikationseinheit (700) zum Bereitstellen einer Schicht (200, 201) auf einem Substrat (100), wobei die Schicht (200, 201) ein radikalisch vernetzbares Harz mit einer Viskosität (23 °C, DIN EN ISO 2884-1) von ≥ 5 mPas bis ≤ 100000 mPas enthält und die Schicht eine solche Zusammensetzung aufweist, dass das Harz unter den Bedingungen des Schritts IV) und/oder IX) des Verfahrens gemäß einem der Ansprüche 1 bis 14 keinen Zustand erreicht, in dem in einer dynamisch-mechanischen Analyse mit einem Platte/Platte-Oszillationsviskosimeter gemäß ISO 6721-10 bei 20 °C und einer Kreisfrequenz von 1/s der Betrag des Speichermoduls G' größer oder gleich dem Betrag des Verlustmoduls G" ist;
- eine zweite Applikationseinheit (750) zum Auftragen einer Zusammensetzung umfassend einen Initiator für eine radikalische Vernetzung des Harzes, entsprechend einem ausgewählten Querschnitt des Gegenstands, auf oder in die Schicht (200, 201);
- eine Energie-Einwirkungseinheit (800) zum Einwirken von Energie auf wenigstens den Teil der Schicht (200, 201), welcher den Initiator für die radikalische Vernetzung des Harzes enthält;
- eine Kontaktierungseinheit (900) zum Kontaktieren von durch die Energie-Einwirkungseinheit radikalisch vernetzten Volumina (400, 401) und zum Entfernen dieser Volumina (400, 401) vom Substrat (100);
wobei die zweite Applikationseinheit das Auftragen auf Anweisung der Steuerungseinheit (700) durchführt und die Kontaktierungseinheit (900) das Kontaktieren auf Anweisung der Steuerungseinheit (700) durchführt.

## Claims

1. A process for producing an article comprising the steps of:
I) providing a layer (200) on a substrate (100), wherein the layer (200) contains a radically crosslinkable resin having a viscosity (23 °C, DIN EN ISO 2884-1) of ≥ 5 mPas to ≤ 100000 mPas and the layer has a composition such that under the conditions of step IV) the resin does not attain a state in which in a dynamic mechanical analysis with a plate/plate oscillation viscometer according to ISO 6721-10 at 20°C and an angular frequency of 1/s the magnitude of the storage modulus G' is greater than or equal to the magnitude of the loss modulus G";
II) applying a composition comprising an initiator for a radical crosslinking of the resin onto or into the layer (200) according to a first selected cross section of the article so that at least one crosslinkable volume (250, 251) comprising radically crosslinkable resin and initiator for a radical crosslinking of the resin according to the first selected cross section of the article is formed;
III) contacting the at least one crosslinkable volume (250, 251) formed in step II) with a carrier (500);
IV) energizing the layer (200) so that at least one crosslinked volume (400, 401) according to the first selected cross section of the article is formed from the at least one crosslinkable volume (250, 251) and the at least one crosslinked volume (400, 401) is joined to the carrier (500);
V) removing the carrier (500) including the at least one crosslinked volume (400, 401) joined to the carrier (500) from the substrate (100);
VI) providing a further layer (201) on the substrate (100), wherein the layer (201) contains a radically crosslinkable resin having a viscosity (23 °C, DIN EN ISO 2884-1) of ≥ 5 mPas to ≤ 100000 mPas and the layer has a composition such that under the conditions of step IX) the resin does not attain a state in which in a dynamic mechanical analysis with a plate/plate oscillation viscometer according to ISO 6721-10 at 20°C and an angular frequency of 1/s the magnitude of the storage modulus G' is greater than or equal to the magnitude of the loss modulus G";
VII) applying a composition comprising an initiator for a radical crosslinking of the resin onto or into the layer (201) according to a further selected cross section of the article so that at least one crosslinkable volume (252, 253) comprising radically crosslinkable resin and initiator for a radical crosslinking of the resin according to a further selected cross section of the article is formed;
VIII) contacting the at least one crosslinkable volume (252, 253) formed in step VI) with at least one crosslinked volume (400, 401) previously joined to the carrier (500);
IX) energizing the further layer (201) so that at least one crosslinked volume (402, 403) according to the further selected cross section of the article is formed from the at least one crosslinkable volume (252, 253) and the at least one crosslinked volume (402, 403) is joined to at least one of the crosslinked volumes (400, 401) previously joined to the carrier (500);
X) removing the carrier (500) including the crosslinked volumes (400, 401, 402, 403) joined to the carrier (500) from the substrate (100);
XI) repeating steps VI) to X) until the article is formed.

2. The process as claimed in claim 1, **characterized in that** the radically crosslinkable resin has a viscosity (23°C, DIN EN ISO 2884-1) of ≥ 500 mPas to ≤ 70000 mPas.

3. The process as claimed in claim 1 or 2, **characterized in that** in step I) and/or step VI) the radically crosslinkable resin comprises functional groups selected from vinyl, propenyl, allyl, vinyl ether, maleyl, fumaryl, maleimide, dicyclopentadienyl, acrylamide and (meth)acrylate groups or a combination of at least two of these.

4. The process as claimed in claim 3, **characterized in that** in step I) and/or step VI) the radically crosslinkable resin comprises a urethane (meth)acrylate.

5. The process as claimed in claim 3 or 4, **characterized in that** in step I) and/or step VI) the radically crosslinkable resin comprises at least one isocyanate-functional compound which comprises at least one radiation-curable group selected from: vinyl, propenyl, allyl, vinyl ether, maleyl, fumaryl, maleimide, dicyclopentadienyl, acrylamide and (meth)acrylate groups or a combination of at least two of these (component A) and at least one polyol (component B).

6. The process as claimed in any of claims 1 to 5, **characterized in that** in step II) and/or step VII) the initiator for a radical crosslinking of the resin is selected from: UV-activated initiators, thermally activated initiators, redox initiators and a combination of at least two of these.

7. The process as claimed in any of claims 1 to 6, **characterized in that** the energizing in step IV) and/or step IX) is effected by irradiation with UV light.

8. The process as claimed in any of claims 1 to 7, **characterized in that** the substrate (100) is at least partially transparent in respect of the energy used for energizing in step IV) and/or step IX).

9. The process as claimed in any of claims 1 to 8, **characterized in that** an absorber for the energy energizing in step IV) and/or step IX) and/or an inhibitor for the radical crosslinking of the resin is applied adjacent to crosslinkable volumes (250, 251, 252, 253).

10. The process as claimed in any of claims 1 to 9, **characterized in that** the contacting in step III) and/or step VIII) is performed such that a relative movement of the carrier (500) toward the substrate (100) is performed, the distance between the carrier (500) and the substrate (100) and/or between the carrier (500) and the surface of the layer (200, 201) is monitored and the relative movement upon falling below a predetermined distance is interrupted.

11. The process as claimed in any of claims 1 to 10, **characterized in that** the contacting in step III) and/or step VIII) is performed such that a relative movement of the carrier (500) toward the substrate (100) is performed, the contact pressure between the carrier (500) and the substrate (100) and/or between the carrier (500) and the surface of the layer (200, 201) is monitored and the relative movement upon exceedance of a predetermined contact pressure is interrupted.

12. The process as claimed in any of claims 1 to 11, **characterized in that** the steps IV) and/or IX) are performed such that the at least one obtained crosslinked volume (400, 401, 402, 403) does not contact the substrate (100).

13. The process as claimed in any of claims 1 to 12, **characterized in that** the substrate (100) is formed as a movable conveyor belt having a the layer (200, 201) carrying side.

14. The process as claimed in any of claims 1 to 13, **characterized in that** a plurality of different radically crosslinkable resins are employed in the individual steps VII).

15. A system for performing the process as claimed in any of claims 1 to 14 comprising:
- a control unit (600);
- a substrate (100);
- a first application unit (700) for providing a layer (200, 201) on a substrate (100), wherein the layer (200, 201) contains a radically crosslinkable resin having a viscosity (23 °C, DIN EN ISO 2884-1) of ≥ 5 mPas to ≤ 100000 mPas and the layer has a composition such that under the conditions of step IV) and/or IX) of the process as claimed in any of claims 1 to 14 the resin does not attain a state in which in a dynamic mechanical analysis with a plate/plate oscillation viscometer according to ISO 6721-10 at 20°C and an angular frequency of 1/s the magnitude of the storage modulus G' is greater than or equal to the magnitude of the loss modulus G";
- a second application unit (750) for applying a composition comprising an initiator for a radical crosslinking of the resin according to a selected cross section of the article onto or into the layer (200, 201);
- an energizing unit (800) for energizing at least the portion of the layer (200, 201) which contains the initiator for the radical crosslinking of the resin;
- a contacting unit (900) for contacting volumes (400, 401) radically crosslinked via the energizing unit and for removing these volumes (400, 401) from the substrate (100);
wherein the second application unit performs the applying under instruction from the control unit (700) and the contacting unit (900) performs the contacting under instruction from the control unit (700).

## Revendications

1. Procédé de fabrication d'un objet, comprenant les étapes :
I) préparation d'une couche (200) sur un substrat (100), la couche (200) contenant une résine réticulable par voie radicalaire présentant une viscosité (23°C, DIN EN ISO 2884-1) de ≥ 5 mPa.s à ≤ 100.000 mPa.s et la couche présentant une composition telle que la résine, dans les conditions de l'étape IV), n'atteint pas un état dans lequel, dans une analyse dynamique-mécanique à l'aide d'un viscosimètre oscillant plaque/plaque selon la norme ISO 6721-10 à 20°C et sous une fréquence angulaire de 1/s, la valeur du module d'accumulation G' est supérieure ou égale à la valeur du module de perte G" ;
II) application d'une composition comprenant un initiateur pour une réticulation par voie radicalaire de la résine, conformément à une première section transversale sélectionnée de l'objet, sur ou dans la couche (200) de telle sorte qu'au moins un volume réticulable (250, 251), comprenant de la résine réticulable par voie radicalaire et de l'initiateur pour une réticulation par voie radicalaire de la résine, conformément à la première section transversale sélectionnée, est formé ;
III) mise en contact dudit au moins un volume réticulable (250, 251) formé dans l'étape II) avec un support (500) ;
IV) application d'énergie sur la couche (200), de telle sorte qu'il se forme, à partir dudit au moins un volume réticulable (250, 251), au moins un volume réticulé (400, 401), conformément à la première section transversale sélectionnée de l'objet, et ledit au moins un volume réticulé (400, 401) est lié au support (500) ;
V) élimination du support (500), y compris ledit au moins un volume réticulé (400, 401) lié au support (500) à partir du substrat (100) ;
VI) préparation d'une autre couche (201) sur le substrat (100), la couche (201) contenant une résine réticulable par voie radicalaire présentant une viscosité (23°C, DIN EN ISO 2884-1) de ≥ 5 mPa.s à ≤ 100.000 mPa.s et la couche présentant une composition telle que la résine, dans les conditions de l'étape IX), n'atteint pas un état dans lequel, dans une analyse dynamique-mécanique à l'aide d'un viscosimètre oscillant plaque/plaque selon la norme ISO 6721-10 à 20°C et sous une fréquence angulaire de 1/s, la valeur du module d'accumulation G' est supérieure ou égale à la valeur du module de perte G" ;
VII) application d'une composition comprenant un initiateur pour une réticulation par voie radicalaire de la résine, conformément à une autre section transversale sélectionnée de l'objet, sur ou dans la couche (201) de telle sorte qu'au moins un volume réticulable (252, 253), comprenant de la résine réticulable par voie radicalaire et de l'initiateur pour une réticulation par voie radicalaire de la résine, conformément à une autre section transversale sélectionnée, est formé ;
VIII) mise en contact dudit au moins un volume réticulable (252, 253) formé dans l'étape IV) avec au moins un volume réticulé (400, 401) lié au préalable au support (500) ;
IX) application d'énergie sur l'autre couche (201), de telle sorte qu'il se forme, à partir dudit au moins un volume réticulable (252, 253), au moins un volume réticulé (402, 403), conformément à l'autre section transversale sélectionnée de l'objet, et ledit au moins un volume réticulé (402, 403) est lié à au moins l'un des volumes réticulés (400, 401) liés au préalable au support (500) ;
X) élimination du support (500), y compris les volumes réticulés (400, 401, 402, 403) liés au support (500) à partir du substrat (100) ;
XI) répétition des étapes VI) à X) jusqu'à ce que l'objet soit formé.

2. Procédé selon la revendication 1, **caractérisé en ce que** la résine réticulable par voie radicalaire présente une viscosité (23°C, DIN EN ISO 2884-1) de ≥ 500 mPa.s à ≤ 70.000 mPa.s.

3. Procédé selon la revendication 1 ou 2, **caractérisé en ce que**, dans l'étape I) et/ou dans l'étape VI), la résine réticulable par voie radicalaire comprend des groupes fonctionnels qui sont choisis parmi les groupes vinyle, propényle, allyle, vinyléther, maléinyle, fumaryle, maléinimide, dicyclopentadiényle, acrylamide et (méth)acrylate ou une combinaison d'au moins deux de ceux-ci.

4. Procédé selon la revendication 3, **caractérisé en ce que**, dans l'étape I) et/ou dans l'étape VI), la résine réticulable par voie radicalaire comprend un uréthane-(méth)acrylate.

5. Procédé selon la revendication 3 ou 4, **caractérisé en ce que**, dans l'étape I) et/ou dans l'étape VI), la résine réticulable par voie radicalaire comprend au moins un composé à fonctionnalité isocyanate qui comprend au moins un groupe durcissable par rayonnement choisi parmi : les groupes vinyle, propényle, allyle, vinyléther, maléinyle, fumaryle, maléinimide, dicyclopentadiényle, acrylamide et (méth)acrylate ou une combinaison d'au moins deux de ceux-ci (composant A) et au moins un polyol (composant B).

6. Procédé selon l'une quelconque des revendications 1 à 5, **caractérisé en ce que**, dans l'étape II) et/ou dans l'étape VII), l'initiateur pour une réticulation par voie radicalaire de la résine est choisi parmi : les initiateurs activables par UV, les initiateurs thermiquement activables, les initiateurs redox et une combinaison d'au moins deux de ceux-ci.

7. Procédé selon l'une quelconque des revendications 1 à 6, **caractérisé en ce que**, dans l'étape IV) et/ou dans l'étape IX), l'application de l'énergie a lieu par irradiation par de la lumière UV.

8. Procédé selon l'une quelconque des revendications 1 à 7, **caractérisé en ce que** le substrat (100) est au moins partiellement transparent par rapport à l'énergie appliquée dans l'étape IV) et/ou dans l'étape IX).

9. Procédé selon l'une quelconque des revendications 1 à 8, **caractérisé**
**en ce qu'**un absorbant pour l'énergie appliquée dans l'étape IV) et/ou dans l'étape IX) et/ou un inhibiteur pour la réticulation par voie radicalaire de la résine est/sont appliqué(s) à proximité des volumes à réticuler (250, 251, 252, 253).

10. Procédé selon l'une quelconque des revendications 1 à 9, **caractérisé en ce que** la mise en contact dans l'étape III) et/ou dans l'étape VIII) est réalisée de manière telle qu'un mouvement relatif du support (500) par rapport au substrat (100) est réalisé, la distance entre le support (500) et le substrat (100) et/ou entre le support (500) et la surface de la couche (200, 201) est surveillée et le mouvement relatif est interrompu lors du passage sous une distance prédéfinie.

11. Procédé selon l'une quelconque des revendications 1 à 10, **caractérisé en ce que** la mise en contact dans l'étape III) et/ou dans l'étape VIII) est réalisée de manière telle qu'un mouvement relatif du support (500) par rapport au substrat (100) est réalisé, la pression d'application entre le support (500) et le substrat (100) et/ou entre le support (500) et la surface de la couche (200, 201) est surveillée et le mouvement relatif est interrompu lors du passage au-dessus d'une pression d'application prédéfinie.

12. Procédé selon l'une quelconque des revendications 1 à 11, **caractérisé en ce que** l'étape IV) et/ou l'étape IX) est/sont réalisée(s) de manière telle que ledit au moins un volume réticulé (400, 401, 402, 403) obtenu n'est pas en contact avec le substrat (100).

13. Procédé selon l'une quelconque des revendications 1 à 12, **caractérisé en ce que** le substrat (100) est conçu comme bande transporteuse mobile présentant une face portant la couche (200, 201).

14. Procédé selon l'une quelconque des revendications 1 à 13, **caractérisé en ce que**, dans les différentes étapes VII), une multitude de résines réticulables par voie radicalaire, différentes les unes des autres est utilisée.

15. Système pour la réalisation du procédé selon l'une quelconque des revendications 1 à 14, comprenant :
- une unité de commande (600) ;
- un substrat (100), ;
- une première unité d'application (700) pour la préparation d'une couche (200, 201) sur un substrat (100), la couche (200, 201) contenant une résine réticulable par voie radicalaire présentant une viscosité (23°C, DIN EN ISO 2884-1) de ≥ 5 mPa.s à ≤ 100.000 mPa.s et la couche présentant une composition telle que la résine, dans les conditions de l'étape IV) et/ou de l'étape IX) du procédé selon l'une quelconque des revendications 1 à 14, n'atteint pas un état dans lequel, dans une analyse dynamique-mécanique à l'aide d'un viscosimètre oscillant plaque/plaque selon la norme ISO 6721-10 à 20°C et sous une fréquence angulaire de 1/s, la valeur du module d'accumulation G' est supérieure ou égale à la valeur du module de perte G" ;
- une deuxième unité d'application (750) pour l'application d'une composition comprenant un initiateur pour une réticulation par voie radicalaire de la résine, conformément à une section transversale sélectionnée de l'objet, sur ou dans la couche (200, 201) ;
- une unité d'application d'énergie (800) pour l'application d'énergie sur au moins une partie de la couche (200, 201) qui contient l'initiateur pour la réticulation par voie radicalaire de la résine ;
- une unité de mise en contact (900) pour la mise en contact de volumes (400, 401) réticulés par voie radicalaire par l'unité d'application d'énergie et pour l'élimination de ces volumes (400, 401) à partir du substrat (100) ;
la deuxième unité d'application réalisant l'application sur instruction de l'unité de commande (700) et l'unité de mise en contact (900) réalisant la mise en contact sur instruction de l'unité de commande (700).
